**Europäisches Patentamt**

**European Patent Office**

**Office européen des brevets**

(19)

(11) Veröffentlichungsnummer : **0 456 646 B1**

(12)

# EUROPÄISCHE PATENTSCHRIFT

(45) Veröffentlichungstag der Patentschrift :
28.10.92 Patentblatt 92/44

(51) Int. Cl.$^5$ : **B60R 21/13, B60N 2/48**

(21) Anmeldenummer : **90901562.0**

(22) Anmeldetag : **13.01.90**

(86) Internationale Anmeldenummer :
**PCT/EP90/00071**

(87) Internationale Veröffentlichungsnummer :
**WO 90/08675 09.08.90 Gazette 90/19**

(54) **KRAFTWAGEN IN CABRIO-BAUWEISE MIT EINEM ÜBERROLLBÜGEL.**

(30) Priorität : **06.02.89 DE 3903459**

(43) Veröffentlichungstag der Anmeldung :
**21.11.91 Patentblatt 91/47**

(45) Bekanntmachung des Hinweises auf die
Patenterteilung :
**28.10.92 Patentblatt 92/44**

(84) Benannte Vertragsstaaten :
**DE ES FR GB IT**

(56) Entgegenhaltungen :
**DE-A- 2 545 840**
**DE-C- 2 916 506**
**US-A- 3 292 726**
**US-A- 3 985 388**

(73) Patentinhaber : **AUDI AG**
**Postfach 2 20**
**W-8070 Ingolstadt (DE)**

(72) Erfinder : **ROST, Romulus**
**Taschenturmstr. 3**
**W-8070 Ingolstadt (DE)**

(74) Vertreter : **Engelhardt, Harald**
**AUDI AG Patentabteilung Postfach 220**
**W-8070 Ingolstadt (DE)**

EP 0 456 646 B1

Jouve, 18, rue Saint-Denis, 75001 PARIS

**Beschreibung**

Die Erfindung bezieht sich auf einen Kraftwagen in Cabrio-Bauweise, mit mindestens einem Sitz und einem Überrollbügel gemäß dem Oberbegriff des Patentanspruchs 1.

Ein Kraftwagen in Cabrio-Bauweise mit einem Überrollbügel, welcher durch eine Vorrichtung selbsttätig aus einer Ruhelage in seine Wirkstellung bewegbar ist, ist beispielsweise aus der DE-C-3 732 562 bekannt. Dieser Überrollbügel ist in seiner Ruhelage im Bereich der Hutablage hinter den Fondsitzen untergebracht. Bei Vorliegen bestimmter Voraussetzungen wird der Überrollbügel selbsttätig um eine Achse aus der Ruhelage in seine Wirkstellung verschwenkt. Wenn sich zum Zeitpunkt der vom Fahrzeuglenker nicht beeinflußbaren Auslösung des Überrollbügels gerade der Kopf oder ein Arm eines Fondsitzbenutzers im Schwenkbereich des Überrollbügels befindet, dann kann eine Verletzung dieser Person nicht ausgeschlossen werden.

Der Erfindung liegt die Aufgabe zugrunde, einen Überrollbügel für Kraftwagen in Cabrio-Bauweise so auszubilden, daß das vorstehend beschriebene Verletzungsrisiko ausgeschlossen wird. Darüber hinaus soll der Überrollbügel ohne separate Befestigungsstellen an der Fahrzeugkarosserie platzsparend unterzubringen sein.

Die Aufgabe wird durch die kennzeichnenden Merkmale des Patentanspruchs 1 oder 2 gelöst.

Dadurch, daß der Überrollbügel in seiner Ruhelage in der Rückenlehne des Sitzes oder in einer mit der Rückenlehne verbundenen Kopfstütze angeordnet ist, sind keine Maßnahmen an der Fahrzeugkarosserie notwendig, um das Fahrzeug mit einem Überrollbügel ausrüsten zu können. Der Umstand, daß im Rohbau keine Differenzierung zwischen Fahrzeugen, welche mit einem Überrollbügel auszurüsten sind (Cabrios) und Fahrzeugen, für die kein Überrollbügel notwendig ist (Limousinen), ermöglicht eine kostengünstige Realisierung der Erfindung. Dadurch, daß die Vorrichtung, durch welche der Überrollbügel in seine Wirkstellung bewegt wird, in der Rückenlehne des Sitzes angeordnet ist, wird kein zusätzlicher Bauraum beansprucht.

Zweckmäßig ist, wenn der Überrollbügel translatorisch aus der Ruhelage in die Wirkstellung überführbar ist. Im Gegensatz zu einer Schwenkbewegung, wie dies beim Stand der Technik aufgezeigt wird, besteht durch die geradlinige Bewegung des Überrollbügels nach oben weder eine Verletzungsgefahr für den Sitzbenutzer noch für eine hinter dem mit dem Überrollbügel ausgerüsteten Sitz sitzende Person. Nur der Vollständigkeit halber soll erwähnt werden, daß sich die vorgeschlagene Anordnung sowohl für Vordersitze, als auch für Rücksitze gleichermaßen gut eignet.

Gemäß einer vorteilhaften Ausgestaltung soll der Überrollbügel einen U-förmigen Aufbau aufweisen, wobei in der Ruhelage seine Basis die Rückenlehne bzw. Kopfstütze nach oben abschließt und die beiden Schenkel einen Teil der Außenflächen der Rückenlehne bzw. Kopfstütze bilden.

Besonders vorteilhaft ist, wenn in dem den Überrollbügel aufnehmenden Sitz in an sich bekannter Weise eine Sicherheitsgurtanordnung integriert ist. Ein Sitz mit integrierter Sicherheitsgurtanordnung ist beispielsweise aus der DE-C-2 916 506 bekannt. Die Rückenlehnen derartiger Sitze sind besonders stabil ausgeführt, da die bei einem Aufprall auftretenden Gurtkräfte nicht direkt in die Fahrzeugkarosserie, sondern über die Rückenlehne in die Bodengruppe eingeleitet werden. Ein derartiger Sitz mit verstärkter Rückenlehne eignet sich deshalb besonders zur Aufnahme des vorgeschlagenen Überrollbügels, da die dafür notwendige Verstärkung der Rückenlehne ohnehin vorhanden ist. Bei dieser Kombination ergibt sich außerdem der Vorteil, daß der Sitz als komplett vormontierbare Baugruppe mit Sicherheitsgurt und Überrollbügel außerhalb des Endmontagebandes gefertigt werden kann.

Ein Ausführungsbeispiel der Erfindung ist in der Zeichnung dargestellt und wird nachfolgend näher beschrieben. Es zeigt

Fig. 1 in Vorderansicht einen Fahrzeugsitz mit einem in der Kopfstütze des Fahrzeugsitzes integrierten Überrollbügel,

Fig. 2 den Fahrzeugsitz aus Fig. 1, wobei der Überrollbügel aus der Kopfstütze herausbewegt ist und

Fig. 3 die Kopfstütze mit herausbewegtem Überrollbügel in Seitenansicht.

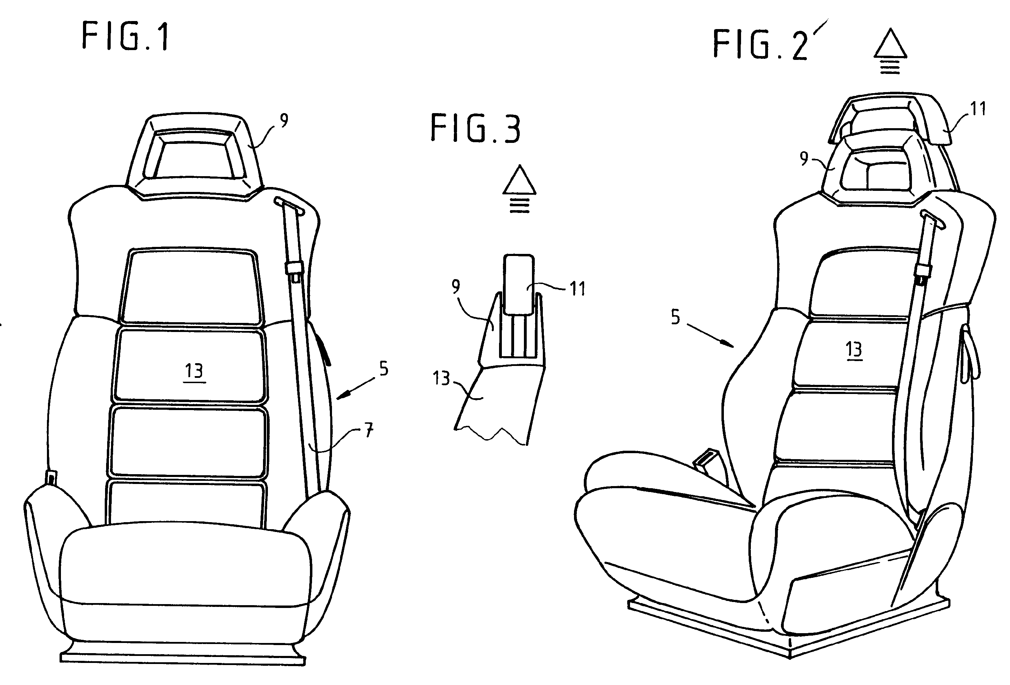

Ein in Fig. 1 dargestellter Sitz 5 für einen Kraftwagen in Cabrio-Bauweise ist mit einem am Sitz angelenkten Sicherheitsgurt 7 und einer Kopfstütze 9 versehen.

Wie die Fig. 2 deutlich zeigt, läßt sich aus der Kopfstütze 9 entlang einer Geradführung (in der Zeichnung nicht erkennbar) ein Überrollbügel 11 herausbewegen. In der herausbewegten Stellung erfolgt eine selbsttätige Arretierung des Überrollbügels 11, so daß dieser in Verbindung mit einer entsprechend verstärkten Rückenlehne 13 des Sitzes 5 belastbar ist.

Die Auslösung der Vorrichtung (nicht dargestellt) zum Herausbewegen des Überrollbügels 11 erfolgt selbsttätig, wenn die dafür vorgesehenen Voraussetzungen vorliegen. Diese Voraussetzungen werden durch entsprechende, an sich bekannte Sensoren erfaßt, welche nicht nur bei einer Kollision reagieren, sondern auch verhältnismäßig langsame Überschläge des Fahrzeuges erfassen und das Herausbewegen des Überrollbügels 11 auslösen. Das Herausbewegen des Überrollbügels 11 muß innerhalb von Bruchteilen von Sekunden erfolgen. Diese Aufgabe erfüllende Vorrichtungen sind bereits bekannt und finden nicht nur in Verbindung mit Überrollbügeln, sondern auch an anderen Stellen des Fahrzeuges Verwendung, wo es darum geht, eine Sicherheitseinrichtung bei einer unfallbedingten Situation schnell in Wirkstellung zu bringen.

**Patentansprüche**

1. Kraftwagen in Cabrio-Bauweise, mit mindestens einem Sitz (5) und einem Überrollbügel (11), welcher durch eine Vorrichtung selbsttätig aus einer Ruhelage in seine Wirkstellung bewegbar ist, dadurch gekennzeichnet, daß der Überrollbügel (11) in seiner Ruhelage in der Rückenlehne des Sitzes (5) angeordnet ist.

2. Kraftwagen nach dem Oberbegriff des Patentanspruchs 1, dessen Sitz mit einer Kopfstütze ausgerüstet ist, dadurch gekennzeichnet, daß der Überrollbügel (11) in seiner Ruhelage in der Kopfstütze (9) untergebracht ist.

3. Kraftwagen nach Anspruch 1 oder 2, dadurch gekennzeichnet, daß der Überrollbügel (11) translatorisch aus der Ruhelage in die Wirkstellung überführbar ist.

4. Kraftwagen nach einem der Ansprüche 1 bis 3, dadurch gekennzeichnet, daß der Überrollbügel (11) einen U-förmigen Aufbau aufweist, und daß in der Ruhelage seine Basis die Rückenlehne bzw. Kopfstütze (9) nach oben abschließt und die beiden Schenkel einen Teil der Seitenflächen der Rückenlehne bzw. Kopfstütze (9) bilden.

5. Kraftwagen nach einem der Ansprüche 1 bis 4, dadurch gekennzeichnet, daß in dem den Überrollbügel (11) aufnehmenden Sitz (5) in an sich bekannter Weise eine Sicherheitsgurtanordnung (7) integriert ist.

**Claims**

1. Convertible-type automobile, having at least one seat (5) and a roll bar (11) that can be automatically moved by a device from a rest position into its operative position, characterised in that in its rest position the roll bar (11) is disposed in the backrest of the seat (5).

2. Automobile according to the preamble of claim 1, the seat of which is fitted with a head restraint, characterised in that in its rest position the roll bar (11) is accommodated in the head restraint (9).

3. Automobile according to claim 1 or 2, characterised in that the roll bar (11) can be transferred translationally from the rest position into the operating position.

4. Automobile according to any of claims 1 to 3, characterised in that the roll bar (11) is a U-shaped construction, and that in the rest position its base upwardly completes the backrest, or head restraint (9), and the two limbs form part of the lateral faces of the backrest or head restraint (9).

5. Automobile according to any of claims 1 to 4, characterised in that a seatbelt assembly (7) is integrated in a _per se_ known manner in the seat (5) accommodating the roll bar (11).

**Revendications**

1.- Voiture du type cabriolet, comportant au moins un siège (5) et un arceau de sécurité (11) qui, à partir d'une position de repos, peut être placé automatiquement dans sa position active par un dispositif, caractérisée en ce que, dans sa position de repos, l'arceau de sécurité (11) est disposé dans le dossier du siège (5).

2.- Voiture selon le préambule de la revendication 1, dont le siège est équipé d'un appuie-tête, caractérisée en ce que, dans sa position de repos, l'arceau de sécurité (11) est logé dans l'appuie-tête (9).

3.- Voiture selon la revendication 1 ou 2, caractérisée en ce que l'arceau de sécurité (11) peut être transféré de la position de repos à la position active par un mouvement de translation.

4.- Voiture selon l'une quelconque des revendications 1 à 3, caractérisée en ce que l'arceau de sécurité (11) présente une forme en U et en ce que, dans la position de repos, sa base ferme vers le haut le dossier ou l'appuie-tête (9) et ses deux branches font partie des surfaces latérales du dossier ou de l'appuie-tête.

5.- Voiture selon l'une quelconque des revendications 1 à 4, caractérisée en ce qu'un dispositif de ceinture de sécurité (7) est Intégré, de façon connue en soi, dans le siège (5) qui reçoit l'arceau de sécurité (11).

# FIG.1

# FIG.3

# FIG.2

EP 0 456 646 B1